# EUROPÄISCHE PATENTSCHRIFT

(11) **EP 0 172 358 B1**
(45) Veröffentlichungstag und Bekanntmachung des Hinweises auf die Patenterteilung: **28.04.1993**
(21) Anmeldenummer: 85107788.3
(22) Anmeldetag: 24.06.1985
(51) Int. Cl.: A01B 49/02, A01B 49/06, A01B 79/00

(54) **Gerätekombination zur Bodenlockerung und Saatbettherrichtung**
Combined machine for soil tilling and seed bed preparation
Machine combinée pour l'ameublissement du sol et la préparation d'un lit de semence

(30) Priorität: 30.06.1984 DE 3424250; 26.07.1984 DE 3427655
(43) Veröffentlichungstag der Anmeldung: 26.02.1986
(60) Teilanmeldung: 89100129.9
(73) Patentinhaber: KUHN S.A., F-67706 Saverne Cedex (FR)
(72) Erfinder: Weichel, Ernst, D-7326 Heiningen (DE)
(74) Vertreter: Patentanwälte Leinweber & Zimmermann

(56) Entgegenhaltungen:
- EP-A- 0 039 792
- EP-A- 0 070 396
- DE-A- 2 546 080
- DE-A- 2 820 407
- DE-A- 3 004 576
- DE-A- 3 127 263
- DE-A- 3 228 891
- FR-A- 2 060 251
- FR-A- 2 425 191
- FR-A- 2 435 889

## Beschreibung

Die vorliegende Erfindung betrifft eine Gerätekombination mit einem Arbeitsgerät, an dessen quer zur Fahrtrichtung verlaufendem Rahmen mit Hilfe von Haltestielen als Flügelscharen oder Blattscharen ausgebildete Lockerungsscharen angeordnet sind, die den Erdboden unterschneiden, anheben und lockern, ohne die natürlichen Bodenschichten wesentlich zu wenden oder untereinander zu vermischen, und die in einer Reihe in Abständen nebeneinander angeordnet sind, und mit einem weiteren ankuppelbaren Arbeitsgerät, an dessen sich quer zur Fahrtrichtung erstreckendem Rahmen wenigstens ein Getriebe und wenigstens ein motorisch angetriebener Werkzeugträger mit rotierenden Werkzeugen zur Krümelung der obersten Bodenschicht angeordnet sind.

Eine derartige Gerätekombination ist aus der EP-A- 0 039 792 bekannt. Diese Schrift betrifft eine Gerätekombination, mit der der Boden über die gesamte Arbeitsbreite unterschnitten, angehoben und gelockert wird, ohne die natürlichen Bodenschichten wesentlich zu wenden oder untereinander zu vermischen, und mit der im gleichen Arbeitsgang die oberste gelockerte Bodenschicht gekrümelt wird. Zum Unterschneiden, Anheben und Lockern des Ackerbodens ohne wesentliches Wenden oder Vermischen der natürlichen Bodenschichten sind Flügelscharen vorgesehen. Diese Flügelscharen sind mittels Haltestielen an einem quer zur Fahrtrichtung angeordneten Rahmen befestigt und zwar derart, dass sie sich im wesentlichen in einer Reihe in Abstand nebeneinander erstrecken. An diesem Rahmen ist ferner ein Gerät zur Krümelung des Bodens angekuppelt, das ebenfalls einen sich quer zur Fahrtrichtung verlaufenden Rahmen aufweist, der wenigstens ein Getriebe und wenigstens einen motorisch angetriebenen Werkzeugträger mit rotierenden Werkzeugen trägt. Bei dieser bekannten Gerätekombination kann das Gerät zur Krümelung leicht an das Gerät zur Bodenlockerung angekuppelt werden und zwar derart, dass der Boden unterschnitten, angehoben und gelockert wird, bevor die rotierenden Werkzeuge die oberste Bodenschicht krümeln. Das Gerät zur Krümelung kann ebenfalls leicht vom Gerät zur Bodenlockerung abgekuppelt werden, sodass beide Geräte auch jeweils einzeln eingesetzt werden können. Nachteilig ist bei dieser bekannten Gerätekombination, dass in gewissen Bodenverhältnissen der von den Scharen unterschnittene verdichtete Erdboden als zusammenhängende "Platte" vom Untergrung abgehoben wird und, ohne gelockert oder zerkleinert zu werden, sich deshalb vor den Haltestielen staut. Dadurch entstehen unerwünschte Verstopfungen.

In der DE-A-17 57 310 wird eine Gerätekombination beschrieben, die zwei Reihen von Scharen besitzt, welche derart zueinander angeordnet sind, dass die Scharen der ersten Reihe einzelne Feldstreifen bearbeiten, zwischen denen andere Feldstreifen zunächst unbearbeitet bleiben, und diese anderen Feldstreifen erst durch die Scharen der zweiten Reihe bearbeitet werden, wenn die von den Scharen der ersten Reihe bearbeitete Erde der daneben liegenden einzelnen Feldstreifen bereits wieder abgelegt ist. Bei dieser bekannten Gerätekombination sind die Scharen als sogenannte "Gänsefusscharen" ausgebildet, die einen relativ steilen Winkel zur Horizontalen haben. Solche Scharen dienen dazu, die Bodenschichten zur Stoppelbearbeitung sehr stark zu wenden und untereinander zu vermischen. Solche Scharen führen zu einem völlig anderen Ergebnis. Selbst wenn diese Scharen in einer einzigen Reihe angeordnet wären, würden sie den verdichteten Erdboden nicht als zusammenhängende "Platte" vom Untergrund abheben.

In der DE-A-31 27 263 ist eine Gerätekombination beschrieben, mit der der Boden ebenfalls über die gesamte Arbeitsbreite unterschnitten, angehoben und gelockert wird, ohne die natürlichen Bodenschichten wesentlich zu wenden oder untereinander zu vermischen, und mit der im gleichen Arbeitsgang die oberste gelockerte Bodenschicht gekrümelt wird. Zum Unterschneiden, Anheben und Lockern des Ackerbodens ohne wesentliches Wenden oder Vermischen der natürlichen Bodenschichten sind Flügelscharen vorgesehen. Diese Flügelscharen sind mittels in Seitenansicht U-förmigen Haltestielen an einem quer zur Fahrtrichtung angeordneten Rahmen befestigt und zwar derart, dass sie sich in einer Reihe in Abstand nebeneinander erstrecken. An diesem Rahmen ist ebenfalls ein Gerät zur Krümelung des Bodens derart angekuppelt, dass es von den U-förmigen Haltestielen von unten, hinten und oben umschlossen wird. Das Gerät zur Krümelung weist ferner einen sich quer zur Fahrtrichtung verlaufenden Rahmen auf, der wenigstens ein Getriebe und wenigstens einen motorisch angetriebenen Werkzeugträger mit rotierenden Werkzeugen trägt. Bei dieser bekannten Gerätekombination kann das Gerät zur Krümelung im Prinzip vom Gerät zur Bodenlockerung abgekuppelt werden. Aufgrund der Tatsache, dass das Gerät zur Krümelung von den Haltestielen umschlossen wird, ist dieses Abkuppeln jedoch äusserst aufwendig. Da sich der stehende Schaft der Haltestiele hinter dem Geräte zur Krümelung erstreckt, ist hier die Gefahr der Verstopfung durch eine zusammenhängende "Platte" nicht vorhanden.

Ausgehend vom Stand der Technik gemäss der EP-A- 0039792 ist es Aufgabe der vorliegenden Erfindung, bei Beibehaltung des leichten Ankuppelns bzw. Abkuppelns des Gerätes zur Krümelung und bei Beibehaltung des Krümelns der obersten Bodenschicht nach dem Unterschneiden, Anheben und Lockern des Ackerbodens, bzw. im wesentlichen nach dem Unterschneiden, Anheben und Lockern des Ackerbodens, den zuvor erwähnten Nachteil zu beseitigen, ohne jedoch die Baulänge der Gerätekombination zu erhöhen bzw. wesentlich zu erhöhen.

Diese Aufgabe wird erfindungsgemäss dadurch gelöst, dass am Rahmen des zweiten Arbeitsgeräts mit Hilfe von Haltestielen in einer zweiten Reihe in Abständen nebeneinander ebenfalls als Flügelscharen oder Blattscharen ausgebildete Lockerungsscharen, die den Erdboden unterschneiden, anheben und lockern, ohne die natürlichen Bodenschichten wesentlich zu wenden oder untereinander zu vermischen, derart angeordnet sind, dass sie sich vor und unterhalb der Bewegungsbahnen der rotierenden Werkzeuge erstrecken und zu den Lockerungsscharen der ersten Reihe auf Lücke angeordnet sind, wobei die Lockerungsscharen der ersten Reihe einzelne Feldstreifen bearbeiten, zwischen denen andere Feldstreifen zunächst unbearbeitet bleiben, und diese anderen Feld - streifen erst durch die Lockerungsscharen der zweiten Reihe bearbeitet werden, wenn die von den Lockerungsscharen der ersten Reihe bearbeitete Erde der daneben liegenden einzelnen Feldstreifen bereits wieder abgelegt ist.

Da eine zweite Reihe von als Flügelscharen oder Blattscharen ausgebildeten Lockerungsscharen vorgesehen ist, die zu den als Flügelscharen oder Blattscharen ausgebildeten Lockerungsscharen der ersten Reihe auf Lücke angeordnet ist, und zwar derart, dass die Lockerungsscharen der ersten Reihe einzelne Feldstreifen bearbeiten, zwischen denen andere Feldstreifen zunächst unbearbeitet bleiben, und diese anderen Feldstreifen erst durch die Lockerungsscharen der zweiten Reihe bearbeitet werden, wenn die von den Lockerungsscharen der ersten Reihe bearbeitete Erde der daneben liegenden einzelnen Feldstreifen bereits wieder abgelegt ist, wird erreicht, dass der verdichtete Erdboden in gewissen Bodenverhältnissen nicht mehr als zusammenhängende "Platte" vom Untergrund abgehoben wird, sondern in Form einzelner Bodenstreifen, die zu keiner Verstopfung führen können. Da andererseits die zweite Reihe von Lockerungsscharen an dem Rahmen des zweiten Arbeitsgerätes so angeordnet ist, dass diese Lockerungsscharen sich vor und unterhalb der Bewegungsbahnen der rotierenden Werkzeuge erstrecken, wird erreicht, dass der Erdboden vor bzw. im wesentlichen vor dem Krümeln, unterschnitten, angehoben und gelockert wird. Da endlich die zweite Reihe von Lockerungsscharen an dem Rahmen des zweiten Arbeitsgerätes angeordnet ist, wird ebenfalls erreicht, dass die Baulänge der Gerätekombination nicht bzw. zumindest nicht wesentlich erhöht wird.

Weitere vorteilhafte Ausgestaltungen der Erfindung sind in den Unteransprüche enthalten.

Gemäss Anspruch 2 sind die Lockerungsscharen der zweiten Reihe an an der Rückseite des Rahmens des zweiten Arbeitsgerätes anbringbaren, nach vorne abgebogenen Haltestielen angebracht, die sich unter dem Werkzeugträger nach vorne erstrecken.

Gemäss Anspruch 3 hingegen sind die Lockerungsscharen der zweiten Reihe an an der Vorderseite der Rahmenrohre des zweiten Arbeitsgerätes angeordneten Haltestielen angebracht, die sich zwischen den Bewegungsbahnen der Werkzeuge erstrecken.

Anspruch 4 sieht vor, dass wenigstens zwei Lockerungsscharen am zweiten Arbeitsgerät in einem der Spurweite des Schleppers entsprechenden, grossen seitlichen Abstand angeordnet sind.

Gemäss Anspruch 5 sind die Haltestiele der Lockerungsscharen in an sich bekannter Weise höhenverstellbar und leicht abnehmbar in an dem Rahmen des ersten und zweiten Arbeitsgerätes angeordneten Stielhaltern angebracht.

Anspruch 6 sieht vor, dass die Stielhalter als am zugeordneten Rahmen anklemmbare, ggf. seitlich verstellbare, nach vorne oder hinten ausragende Stecktaschen für höhenverstellbare Haltestiele ausgebildet sind.

Des weiteren kann vorgesehen werden, dass an das Arbeitsgerät zur Krümelung der obersten Bodenschicht eine Walze (Anspruch 7) und/oder eine Sämaschine (Anspruch 8) ankuppelbar ist, wobei diese Sämaschine auf dem Rahmen des Arbeitsgerätes zur Krümelung der obersten Bodenschicht oder auf die Walze aufsetzbar ist (Anspruch 9).

Die Erfindung wird anhand mehrerer, in den Zeichnungen dargestellter Ausführungsbeispiele derart erläutert, daß Merkmale, die in einer Figur gezeichnet und/oder beschrieben sind, sinngemäß auch auf andere Ausführungsbeispiele übertragbar sein sollen.

Es zeigen:
- Fig. 1: eine perspektivische Ansicht schräg von hinten nach vorne eines Traktors mit angebauter Gerätekombination zur Bodenlockerung und Saatbettherrichtung in Arbeitsstellung;
- Fig. 2: eine teilweise geschnittene Seitenansicht auf diese Kombination mit etwas geänderter Anordnung der Scharstiele und einer Packerwalze;
- Fig. 3: eine schematische Draufsicht auf ein von dieser Gerätekombination bearbeitetes Feld;
- Fig. 4: eine der Fig. 1 entsprechende perspektivische Ansicht auf den Traktor und das angehängte Arbeitsgerät zur Bodenlockerung mit vier Lockerungskörpern in Arbeitsstellung bei der Vorlockerung.
- Fig. 5: eine der Fig. 1 entsprechende perspektivische Ansicht auf das direkt am Schlepper angekuppelte Arbeitsgerät zur Krümelung der Bodenoberfläche mit an diesem Rahmen zusätzlich angeordneten Lockerungskörpern und einer Packerwalze in Arbeitsstellung;
- Fig. 6: eine schematische, teilweise geschnittene Seitenansicht dieses Arbeitsgerätes mit an der Vorder- und/oder Rückseite des Rahmens angeordneten Haltestielen für Lockerungsschare und einer Zahnpackerwalze mit Abstreifern;
- Fig. 7: zeigt eine Seitenansicht und
- Fig. 8: eine Ansicht von hinten auf ein Gerät etwa nach Fig. 5 mit einem zusätzlichen, leicht abnehmbar aufgebauten Sägerät , das einen zentralen Vorratsbehälter für Saatgut, eine zentrale mechanische Verteilvorrichtung, ringförmig an diese angeschlossene Saatgutschläuche aufweist, deren untere Enden hinter dem kleinen Streichblech in an einem abnehmbar angebauten Zusatzrahmen angebrachten Haltevorrichtungen befestigt sind;
- Fig. 9: zeigt eine schematische Seitenansicht eines Ackerschleppers mit am Frontlader angebrachtem Schichtengrubber mit Stützrädern und am Heckkraftheber angebrachter Rotoregge mit hinter dem Rahmen angeordneten, gebogenen Haltestielen mit Blattscharen, Packerwalze und Anbaudrillmaschine;
- Fig. 10: zeigt ein Ausführungsbeispiel, bei dem Haltestiele nebeneinander an der Rückseite des Rahmens der Rotoregge angeordnet sind und auf die Kombiwalze eine Drillvorrichtung aufgesetzt ist;
- Fig. 11: zeigt eine schematische Seitenansicht und
- Fig. 12: eine schematische Draufsicht auf einen Normalschleper mit Zwillingsbereifung vorne und hinten und am Frontkraftheber angebrachtem Schichtengrubber mit Doppel-Stützrädern und vier Lockerungsscharen, am Heckkraftheber angebrachter Rotoregge mit in den Fahrspuren und in der Mitte an gebogenen Haltestielen angeordneten Blattscharen und einer sog. Packerwalzen-Drillmaschine.

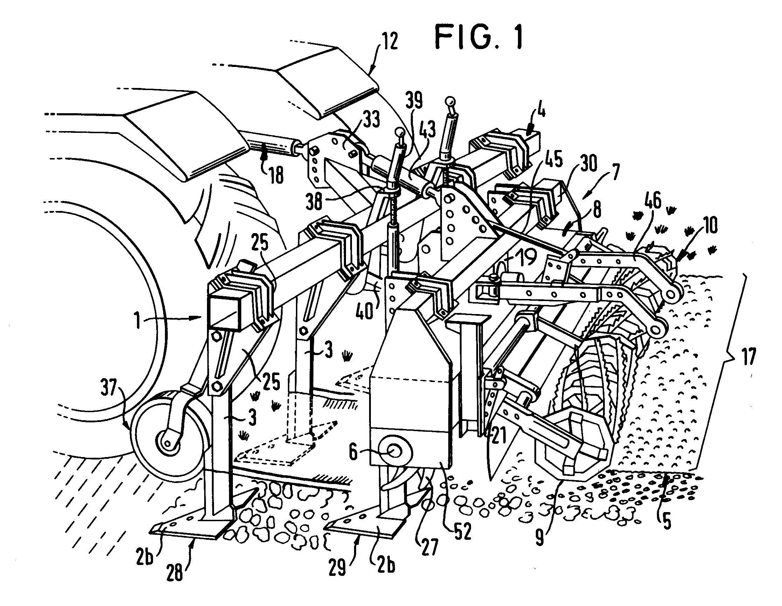

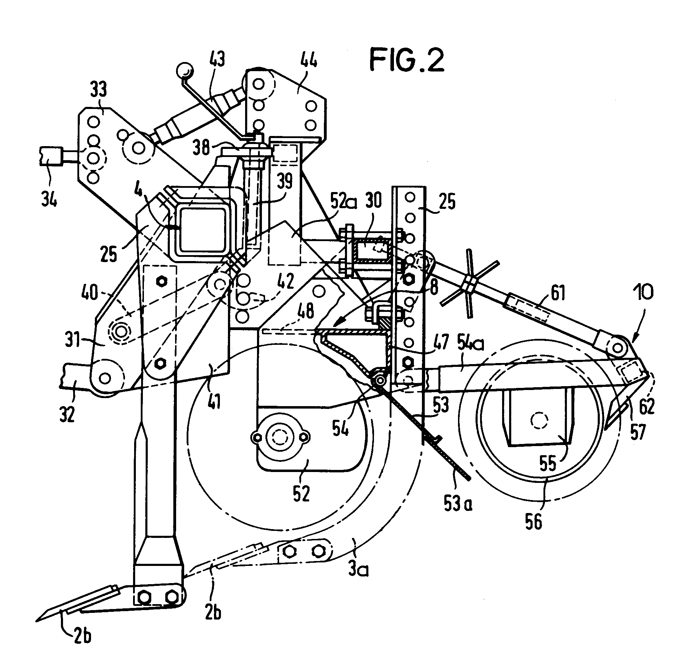

Wie aus den Figuren 1 bis 3 zu ersehen, wird am Heckkraftheber 18 eines Schleppers 12 das Arbeitsgerät 1 mit an dessem Rahmen 4 lösbar angebrachten Stielhaltern 25, in denen Haltestiele 3 mit Lockerungsscharen 2b lösbar befestigt sind und die vorwiegend jeweils links und rechts der Fahrspuren des Schleppers 12 angeordnet werden, angekuppelt. Am Rahmenrohr 4 sind nach vorne unten ragende Konsolen 31 für die Unterlenker 32 des Schleppers 12 und nach oben ragende Konsolen 33 für den Oberlenker 34 des Schleppers 12 sowie höhenverstellbare Stützräder 37 und in Kugelaugen 38 geführte Verstellspindeln 39 gelagert. Unterlenker 40 zum Anbau weiterer Geräte sind in an sich bekannter Weise an mit den Unterlenkerkonsolen 31 verbundenen Platten 41 angelenkt und daher höhenbeweglich, bzw. durch die Spindeln 39, die etwa am freien Ende, das als Schnellkupplungshaken 42 ausgebildet sein kann, angreifen höhenverstellbar und feststellbar, sowie begrenzt schwenkbar befestigt, so daß das Gerät zur Bodenlockerung 1, das auch unter dem Namen "Schichtengrubber" am Markt bereits bekannt ist, wie aus Figur 2 ersichtlich, extrem kurz gebaut ist, so daß das Gerät 7 zur Krümelung der obersten Bodenschicht, bzw. zur Saatbettherrichtung, in bekannter Weise in einem sehr engen Abstand unmittelbar hinter dem Rahmen 4 an den Unterlenkern 40 und einem zusätzlichen Oberlenker 43 an den Schichtengrubber 1 angekuppelt werden kann.

Es ist aber auch über seinen Anbaubock 44 direkt an den Schlepperkraftheber 18 in bekannter Weise ankuppelbar und kann auch über in Fig. 2 nicht dargestellte, aus Figur 1 aber ersichtliche Oberlenker 45 und Unterlenker 46 mit weiteren angekuppelten Arbeitsgeräten, z.B. einer Drillmaschine oder einer Kombiwalze verbunden werden.

Erfindungsgemäß ist nun das Gerät zur Saatbettherrichtung 7, das auch unter dem Namen "Rotoregge" schon am Markt bekannt ist, mit einem zusätzlichen Rahmenrohr 30 versehen, das etwa parallel zum als Hohlkörper ausgebildeten Rahmen 47 der Rotoregge 7, der gleichzeitig als Abdeckung 48 der rotierenden Zinken 27 dient, ausgerüstet. Das Rahmenrohr 30 erstreckt sich in einem Abstand oberhalb des Rahmens 47 entweder, wie in Figur 2 dargestellt, genau vertikal über der hinteren Kante des Hohlträgers 47, oder, wie aus Figur 1 ersichtlich, etwa in Rahmenmitte.

Es befindet sich auch im Bereich oberhalb des in diesen beiden Figuren nur teilweise sichtbaren Getriebes 19 mit vorderer Einganswelle 49, hinterer Abtriebswelle 50 und seitlicher Abtriebswelle 51. Es ist mit den äußeren Lagerschilden 52 für den rotierenden Werkzeugträger 6 und mit Befestigungskonsolen 52a für den oberen Teil des Anbaubockes 44 verbunden, so daß es mit dem Hohlträger 47 und in der Regel zwei äußeren Konsolen 52 und zwei jeweils seitlich der Gerätemitte liegenden Konsolen 52a zu einem starren sehr stabilen und trotzdem wenig Gewicht aufweisenden Gesamtrahmen 8 verbunden ist, der es erlaubt, beispielsweise die Arbeitsgeräte auch mit großer Arbeitsbreite auszuführen und gleichzeitig Haltestiele entweder nur auf der Vorderseite des Rahmens 8, wie in Figur 1 dargestellt, oder nur auf der Rückseite des Rahmens 8, wie in Figur 2 dargestellt, an am Rahmenrohr angeklemmten Stielhaltern 25 leicht lösbar und höhenverstellbar anzubringen.

Am Rahmen 47 ist ein an sich bekanntes Streichblech 53 mit Streichlippe 53a in einem Scharnier 54 angeordnet, das den von den Zinken 27 zerkleinerten Erdboden kurzzeitig im Bereich der rotierenden Zinken 27 halt, so daß er gut zerkleinert und gemischt wird, ihn anschließend einebnet und leicht verfestigt. Bei den in Figur 2 dargestellten Ausführungsbeispielen weist das Streichblech 53 im Bereich der anzubauenden Stiele 3a Durchbrüche auf.

Außerdem ist am Hohlträger 47 über Schwenkarme 54a eine Anbaupackerwalze 56 über Spindeln 61 höhenverstellbar am Rahmen 8 der Rotoregge 7 angelenkt.

Die Schwenkarme 54a sind an ihrem freien Ende durch ein Rahmenrohr 62 starr verbunden, an dem die Abstreifer 57 befestigt sind.

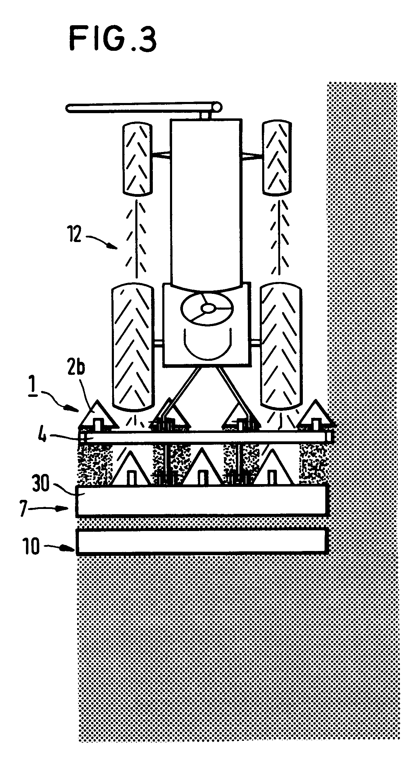

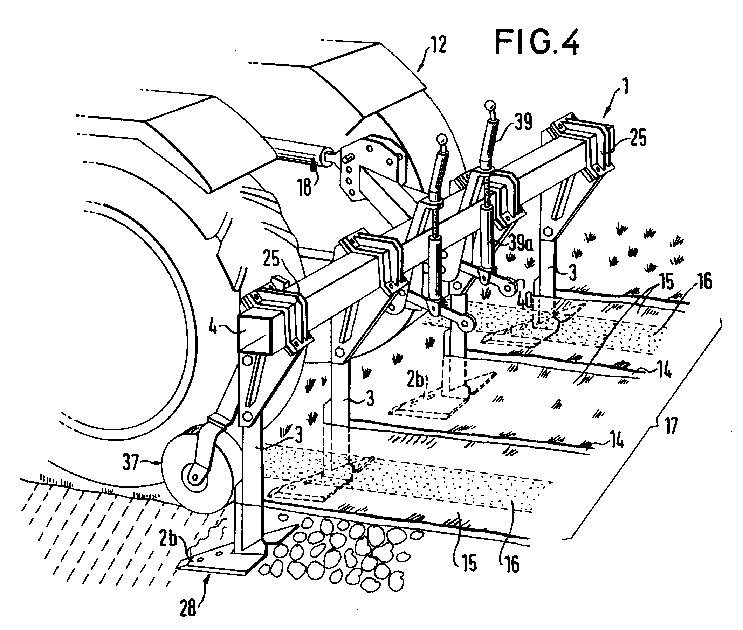

Die Packerwalze 56 kann gegen die leichtere Krümelwalze 9, die in Figur 1 dargestellt ist, ausgetauscht und mit verschiedenen Walzenkörpern ausgebildet werden. Die Haltestiele können entweder als senkrechte Haltestiele 3 oder als gebogene Haltestiele 3a angeordnet werden, so daß die an ihrem unteren Ende in bekannter Weise lösbar befestigten Blattschare 2b sich vor und unterhalb der Bewegungsbahnen der Zinken 27 erstrecken. Wie aus den Figuren 1 und 3 ersichtlich, kann ein schwerer Schlepper mit der Kombination der Arbeitsgeräte 1, 7 und 10 und sowohl am Rahmen 4, als auch am Rahmen 30 auf Lücken zu den am Rahmen 4 angeordneten Blattscharen 2b unterschiedlicher Breite das ganze Ackerbeet 17, das der Arbeitsbreite beider Geräte entspricht, auf einstellbare Tiefe lückenlos, aber so lockern, daß die erste Reihe 28 der Schare 2b den Boden nur streifenweise lockert, ohne "Bodenplatten" aus dem verdichteten Verbund herauszulösen, während die zweite Reihe 29 den von der ersten Reihe 28 ungelockerten Zwischenraum zwischen zwei Scharen 2b lockert, d.h. den Boden anhebt, so daß er von den Zinken 27 des rotierenden Werkzeugträgers 6 auf einstellbare Tiefe flach gekrümelt, von dem Streichblech 53 mit Streichlippe 53a eingeebnet und von der Krümel- oder Packerwalze 10 weiter oberflächlich gekrümelt, bzw. rückverfestigt werden kann. Da übliche Schlepper in aller Regel die tiefe Bodenbearbeitung nicht in der Arbeitsbreite von Geräten zur Saatbettherrichtung, bzw. der damit übereinstimmenden Drillmaschine durchführen können, besteht bei großer Arbeitstiefe in verdichteten Böden und verhältnismäßig leichten Schleppern erfindungsgemäß aber auch die Möglichkeit, die Arbeitsgeräte 1 und 7 im Bereich der Oberlenker 43 und der Unterlenker 40 zu trennen und gemäß der Figur 4 mit beispielsweise vier Haltestielen 3 mit Blattscharen 2b nur einzelne Feldstreifen 14 zu lockern, die vorzugsweise seitlich oder zwischen den Rädern des Schleppers 12 angeordnet sind und zwischen denen Feldstreifen 15 ungelockert liegen bleiben. Dadurch können die Stiele 3 und die Blattschare 2b der ersten Reihe 28 in beliebiger Anzahl und auch einstellbarer Breite der Schare 2b auf der Gesamtbreite des Ackerbeetes 17 so verteilt werden, daß der Schlepper 12 de facto beispielsweise nur die Hälfte der Gesamtbreite des Ackerbeetes 17 lockern muß und so, daß die Fahrspuren 16, die zum Teil mit den ungelockerten Feldstreifen 15 identisch sein können, bei der ersten Fahrt frei bleiben.

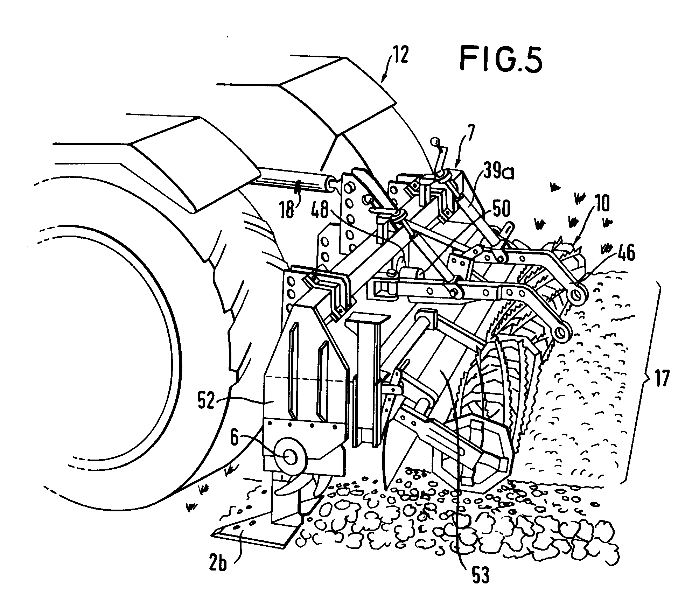

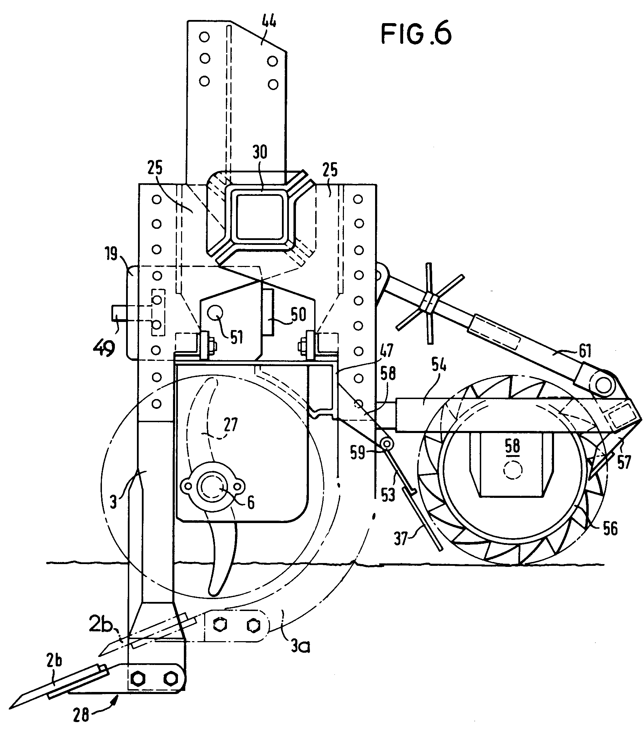

Wie die Figuren 5 und 6 zeigen, wird in einem unmittelbar anschließend vom selben Schlepper oder von einem zweiten Schlepper, oder überhaupt in einem zeitlichen Abstand durchzuführenden zweiten Arbeitsgang nur das Arbeitsgerät 7 an den Kraftheber 18 des Schleppers 12 angekuppelt, so daß die an dem Rahmenrohr 30 angebrachten Haltestiele 3 oder 3a mit Blatscharen 2b z.B. die Fahrspuren 16 des Schleppers und auch einen Streifen 15 in Schleppermitte zusätzlich lockern, gleichzeitig aber auch der Erdboden über die gesamte Breite des Beetes 17 auf einstellbare Tiefe gekrümelt, vom Streichblech 53 eben gestrichen und von der Krümel- oder Packerwalze 10 rückverfestigt, eingeebnet und oberflächlich gekrümelt abgelegt wird. Wenn der Schlepper 12 das Gesamtgewicht dieser Geräte ausheben kann, ist es möglich, an die Unterlenker 46 und Oberlenker 45, die an der Rückseite des Rahmenrohres 30 angeordnet und durch die Spindeln 39a auf einstellbare Höhe gehalten sind, ein weiteres Arbeitsgerät, z.B. eine Anbau- oder Aufbau-Drillmaschine 13, 93 oder 77 anzukuppeln. Dies hat den Vorteil, daß die vorhandene Zugleistung des Schleppers 12 über die Lockerungsschare 2b voll ausgenutzt und auch die Zapfwellenleistung des Schleppers 12 über die rotierenden Zinken 27 restlos verwertet werden kann, so daß auch leichte oder mittlere Schlepper in der Lage sind, die Bodenbearbeitung auf größere Arbeitsbreite durchzuführen, wenn diese z.B. durch vorhandene Geräte zur Saatbettherrichtung oder Sämaschinen im jeweiligen Betrieb bereits festgeschrieben ist, ohne daß es Schwierigkeiten beim Ausheben von einzelnen Geräten oder der Gesamt-Kombination geben kann, und auch ohne daß es erforderlich wäre, z.B. Blattschare gegen Flügelschare auszutauschen oder einzelne Haltestiele bei den verschiedenen Arbeitsgängen umzumontieren. Es ist nur erforderlich, das Arbeitsgerät 1 an den Schlepperkraftheber 18 anzuhängen, dann wieder abzuhängen und dafür das Arbeitsgerät 7 direkt an den Schlepper 12 oder auch an das Arbeitsgerät 1 anzukuppeln. Es ist natürlich auch möglich, bei diesem zweiten Arbeitsgang z.B. die Lockerungsschare 2b des Arbeitsgerätes 1 geringfügig tiefer laufen zu lassen, als beim ersten Arbeitsgang und dementsprechend beide Arbeitsgeräte zusammen einzusetzen. Es darf in diesem Zusammenhang daran erinnert werden, daß hydraulische Stützräder zu solchen Gerätekombinationen bereits bekannt sind, mit denen sie ggf. ausgehoben und am Ackerboden abgestützt werden könnten, falls der Schlepper 12 nicht in der Lage sein sollte, das Gesamtgewicht dieser Gerätekombination auszuheben. Aus den Zeichnungen ist aber ersichtlich, daß beide Kombinationen de facto die kürzest mögliche Baulänge erzielen und deshalb große Vorteile gegenüber den zur Zeit in der Landwirtschaft angebotenen zweibalkigen Kurzgrubbern erreichen, die um einen halben oder ganzen Meter länger sind, als die vorstehend beschriebenen Gerätekombinationen. Trotzdem können die Werkzeuge 2b der ersten Reihe 28 in erheblichem Abstand voneinander angeordnet werden, ohne daß Verstopfungen bei Stroh befürchtet werden müßten und die Werkzeuge 2b der zweiten Reihe 29 sind am Rahmen 30, bzw. 8 der Rotoregge 7 zu den Werkzeugen 2b der ersten Reihe 28 auf Lücke, so daß die gleich gute Arbeitsqualität wie bei bekannten zweibalkigen Kurzgrubbern entsteht, ohne daß deren gesamte Baulänge in Kauf genommen werden müßte.

Es muß aber darauf hingewiesen werden, daß die flachen Blattschare 2b mit einer scharfen Spitze, deren Oberfläche und seitliche Schneidkanten sich in einem sehr spitzen Winkel zur Horizontalen im Erdboden bewegen, ohne daß es zu einer Verschmierung des stehenbleibenden Untergrundes kommen könnte, einerseits wenig Kraft brauchen, andererseits den Boden auf beliebige Tiefe ggf. in mehreren Arbeitsgängen mit unterschiedlicher Arbeitstiefe schonend, d.h. ohne Mischung und Wendung lockern können und sich daher sehr gut mit der Krümelarbeit der Zinken 27 ergänzen.

Wie aus Figur 6 zu ersehen, hat das etwa oberhalb der Mitte des Rahmens 47 und auch oberhalb des Getriebes 19 angeordnete zentrale Rahmentragrohr 30 den Vorteil, daß mit denselben Stielhaltern 25 beliebig viele Haltstiele 3 für Blattschare 2b auf der Vorder- und/oder auf der Rückseite des Rahmens 47 sehr stabil befestigt werden können, weil das Rahmenrohr 30, wenn es an vier Stellen, z.B. über die äußeren Konsolen 52 und die mittleren Konsolen 52a für den Anbaubock 44 mit dem Hohlträger 47 verbunden ist, eine Art "Gitterträger" darstellt, so daß die Haltestiele 3, 3 a leicht abnehmbar in den Stielhaltern 25 befestigt werden können. Es ist daher möglich, alle Stiele in weiten oder engen Abständen an der Vorderseite, dann aber auch zwischen den Bewegungsbahnen der Zinken 27 zu montieren, oder gebogene Stiele 3a zu verwenden, die an der Rückseite des Rahmens 47, bzw. des Rahmenrohrs 30 anzuordnen sind, wenn es drauf ankommt, große Strohmengen verstopfungsfrei zu zerkleinern, einzumischen, den Boden tief zu lockern und trotzdem eine geringe Bauweise der gesamten Kombination sicherzustellen.

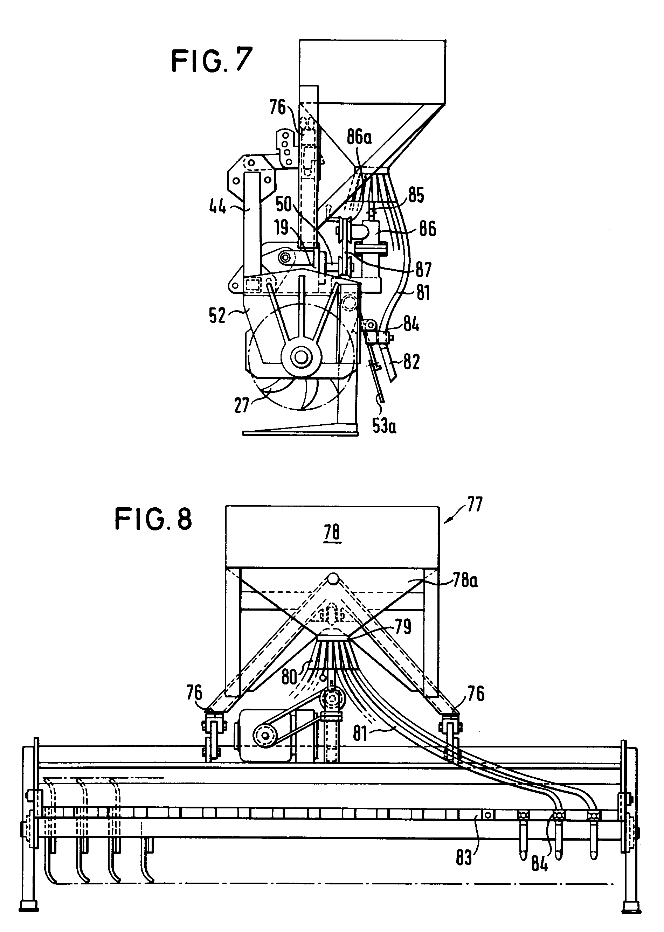

Figur 7 und 8 zeigen eine schematische Seitenansicht und eine Ansicht von hinten auf ein Arbeitsgerät 7 zur Saatbettherrichtung, bzw. zur Krümelung der obersten Bodenschicht bei Welchem hinter dem Anbaubock 44 mit Verbindungselementen 76, die unter dem Namen "Weiste-Schnellkupplung" am Markt bekannt sind, Drillmaschinen 77 der verschiedensten Bauarten zeitweise auf das Gerät zur Saatbettherrichtung 7 aufgesattelt werden können, um die Bauweise möglichst kurz und die Schwerpunktlage der Gesamtkombination so nahe wie möglich am Schlepper zu halten.

Die in den Figuren 7 und 8 dargestellte Sämaschine, bzw. Drillmaschine hat einen hochliegenden Saatgutbehälter 78 mit zentralem Auslauftrichter 78a, unter dem eine rotierende Verteilvorrichtung 79 angeordnet ist, mit kreisförmig angeordneten Auslaufstutzen 80, an denen Schläuche 81 befestigt sind, die zu Auslaufrohren 82 führen, die an einem Särohrrahmen 83 in Führungen 84 im Abstand der Saatreihen gehalten werden, der leicht lösbar hinter dem kleinen Streichblech abnehmar befestigt werden kann. Die Verteilvorrichtung 79 wird mit der Abtriebswelle 85 eines Winkelgetriebes 86 verbunden, dessen Eingangswelle eine Keilriemenscheibe 86a trägt, die über einen Keilriemen 87 mit einer auf die Abtriebswelle 50 des Getriebes 19 gesteckte Keilriemenscheibe in Antriebsverbindung steht. Die Saatschläuche 81 können natürlich auch auf Säschare aller bekannten Bauarten aufgesteckt, bzw. mit diesen verbunden werden, wenn anstatt Breitsaat Drillsaat erwünscht ist. Es ist aber aus der Zeichnung Figur 7 zu erkennen, daß das von den Zinken 27 zerkleinerte Erdreich von der Streichlippe 53a eben gestrichen wird, so daß das Saatgut durch die Auslaufrohre 82 in einen bestens eingeebneten, gekrümelten Erdboden gelangt und ggf. durch Druckrollen angedrückt werden kann. Diese Drillmaschine ist außerordentlich einfach gebaut, hat ein geringes Gewicht und paßt mit entsprechenden Verbindungselementen sowohl auf die Rotoregge als auch auf die Kombiwalze. Sie ermöglicht es daher, extrem kurze Bestellkombinationen zu bilden und damit auch mit verhältnismäßig leichten Schleppern die Bodenbearbeitung, Saatbettherrichtung und Bestellung in einem, höchstens zwei Arbeitsgängen ohne eine Schlepperspur im gelockerten Boden durchzuführen.

Die in den bisherigen Figuren beschriebenen Arbeitsgeräte lassen sich nun an den verschiedenen Bauarten von Traktoren in ganz verschiedener Weise, in aller Regel mit dem großen Vorteil kombinieren, daß mehrere Arbeitsgänge in einer Feldüberfahrt durchführbar sind, die verwendeten Gerätekombinationen aber an die Art der Arbeit, Bodenzustand usw. bestens angepaßt werden können. Es sind daher in jedem Falle Kombinationen erreichbar, die eine sehr günstige Schwerpunktlage und ein günstiges Gewicht aufweisen, also auch mit leichten oder mittleren Schleppern betrieben werden können, ohne daß im gelockerten, saatfertig hergerichteten oder eingesäten Ackerbeet Bodenverdichtungen durch Schlepperspuren zurückbleiben.

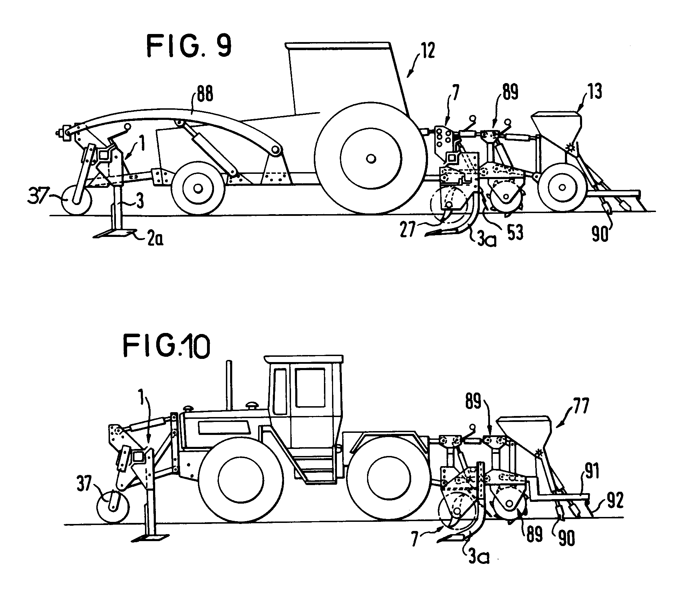

Fig. 9 zeigt z.B. einen Ackerschlepper 12 mit Frontlader 88, an dem ein Schichtengrubber 1 mit Stützrädern 37 und eine Anzahl Stiele 3 mit Flügelscharen 2a angeordnet ist, die den Erdboden seitlich neben und zwischen den Vorderrädern auflockern, so daß alle Schlepperräder auf einem ungelockerten Feldstreifen 15 fahren. Am Heckkraftheber ist das Arbeitsgerät 7 mit an dieser angehängten Kombiwalze 89 und eine Anhänge-Drillmaschine 13 hintereinander angebracht. An der Rückseite der Rotoregge 7 sind gebogene Haltestiele 3a mit Flügel- oder Blattscharen 2a, 2b angeordnet, die unter den Bewegungsbahnen der Zinken 27 nach vorne ragen und den Erdboden im Bereich der Fahrspuren auflockern, während die Zinken 27 das ganze Beet zerkleinern, so daß die gelockerte Erde von dem Streichblech 53 eben gestrichen, von der Kombiwalze 89 rückverfestigt und von der üblichen Drillmaschine 13 eingesät werden kann. Diese Gerätekombination ermöglicht bei starken Schleppern die problemlose Direktbestellung in ein Stoppelfeld, weil die tiefe Bodenlockerung, Zerkleinerung, Rückverfestigung und das Drillen in einem Arbeitsgang durchführbar ist.

Sie hat aber noch den Nachteil, daß die hinter dem Schlepper angebauten Geräte verhältnismäßig schwer sind, obwohl der Front-Schichtengrubber für eine günstige Aufteilung der Gerätegewichte auf beide Schlepperachsen sorgt.

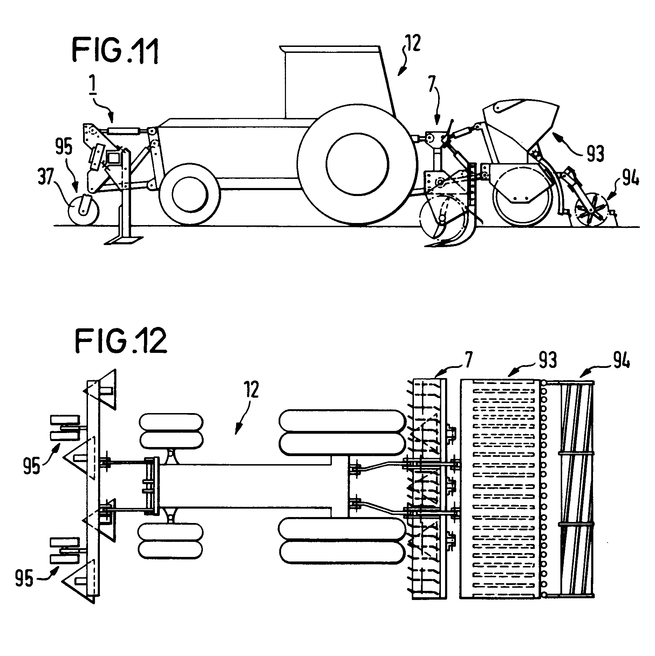

Bei dem Ausführungsbeispiel nach Figur 10 befindet sich die Kombiwalze 89 hinter der Rotoregge 1 und die Drillmaschine 77 ist auf die Kombiwalze 89 aufgesetzt, während die Säschare 90 an einem Rahmen 91 mit Striegel 92 angeordnet sind, der an dem Rahmen der Kombiwalze 89 angelenkt ist. Auch diese Kombination erreicht eine besonders kurze Bauweise. An der Rückseite des Rahmens 8 der Rotoregge 7 sind nach vorne gebogene Haltestiele 3a nebeneinander befestigt, so daß alle Stiele an der Rückseite des Gerätes 7 angebracht sind.

Wie die Figuren 11 und 12 zeigen, ist es sehr vorteilhaft, den Systemschlepper oder den Normalschlepper vorne und hinten mit Zwillingsreifen auszurüsten, um möglichst wenig Bodendruck zu verursachen. Auch beim Schichtengrubber 1 ist es sehr vorteilhaft, wenn die Stützräder 37 als mechanisch oder hydraulisch höhenverstellbare Zwillingsräder 95 ausgerüstet sind. In diesem Fall kann hinter dem Schlepper unmittelbar die Rotoregge 7 und eine Packerwalze mit aufgebauter Drillmaschine angeordnet werden, wenn z.B. am Schichtengrubber 1 breitere Blattschare und an gebogenen Stielen hinter der Rotoregge zwei bis drei Blattschare angebracht werden.

Es besteht also die Möglichkeit, vorhandene Drillmaschinen, die zum Anhängen an einen Dreipunkt-Kraftheber eines Schleppers bestimmt sind, höhenbeweglich über Unterlenker anzukuppeln. Es besteht aber auch die Möglichkeit, Drillmaschinen mittels einfacher Zusatzeinrichtungen auf die Rotoregge abnehmbar aufzusatteln und dadurch den Schwerpunkt der Gesamtkombinatin näher an die Hinterachse des Schleppers heranzubringen, als dies bei einer angehängten Drillmaschine möglich wäre.

Ein besonderer Vorteil dieser Konstruktion besteht ferner darin, daß ein und dieselbe Drillmaschine sowohl auf die Rotoregge, als auch auf die Kombiwalze aufsetzbar ist, um in allen Fällen, wo die Rotoregge nicht benötigt wird, oder im Anschluß an die Rotoregge eine Rückverdichtung des von dieser geschaffenen Saatbeetes erforderlich ist, mit ein und derselben Drillmaschine und einer kurzbauenden Kombination bei günstigem Schwerpunkt drillen zu können.

Wenn Haltestiele an der Rückseite des Rahmens der Rotoregge angebracht sind, wird das Streichblech in eine zweite Aufnahmebohrung hinter dem Rahmen verlegt, so daß zwischen dem Rahmen und der Oberkante des Streichbleches ein freier Raum entsteht, in dem die Stiele nach unten geführt werden können. Dieser freie Raum wird auch dazu ausgenützt, Särohre einer aufgesetzten Drillmaschine unmittelbar vor dem Streichblech enden zu lassen, so daß das Saatgut in den von der Rotoregge aufgeworfenen Strom eingelegt und anschließend von der Packer- oder Kombiwalze angedrückt werden kann.

Es ist aber auch möglich, die Rotoregge mit an sich bekannten, separat anbringbaren Zusatzrahmen mit Halteschienen für normale Drillschare oder Scheibenschare zu versehen, die stets an der Rotoregge bleiben, aber auch abnehmbar sind und in deren Saatgutzuleitungsöffnungen die Saatleitungen der aufgesetzten Drillmaschine wahlweise gesteckt werden können, so daß mit dieser einfachen Kombination sowohl Breitsaat als auch Drillsaat durchführbar wird.

Alle diese Vorteile ermöglichen eine Verringerung der Investitionskosten, eine drastische Senkung der Betriebskosten, eine erhebliche Steigerung der Arbeitsqualität und den Einsatz von Gerätekombinationen auch hinter verhältnismäßig leichten Schleppern, so daß die Erfindung einen wesentlichen Fortschritt darstellt.

## Patentansprüche

1. Gerätekombination mit einem Arbeitsgerät (1), an dessen quer zur Fahrtrichtung verlaufendem Rahmen (4) mit Hilfe von Haltestielen (3) als Flügelscharen (2a) oder Blattscharen (2b) ausgebildete Lockerungsscharen (2a, 2b) angeordnet sind, die den Erdboden unterschneiden, anheben und lockern, ohne die natürlichen Bodenschichten wesentlich zu wenden oder untereinander zu vermischen, und die in einer Reihe (28) in Abständen nebeneinander angeordnet sind, und mit einem weiteren ankuppelbaren Arbeitsgerät (7), an dessen sich quer zur Fahrtrichtung erstreckendem Rahmen (8, 30, 47) wenigstens ein Getriebe (19) und wenigstens ein motorisch angetriebener Werkzeugträger (6) mit rotierenden Werkzeugen (27) zur Krümelung der obersten Bodenschicht (5) angeordnet sind, dadurch gekennzeichnet, daß am Rahmen (8, 30, 47) des zweiten Arbeitsgeräts (7) mit Hilfe von Haltestielen (3) in einer zweiten Reihe (29) in Abständen nebeneinander ebenfalls als Flügelscharen (2a) oder Blattscharen (2b) ausgebildete Lockerungsscharen (2a, 2b), die den Erdboden unterschneiden, anheben und lockern, ohne die natürlichen Bodenschichten wesentlich zu wenden oder untereinander zu vermischen, derart angeordnet sind, daß sie sich vor und unterhalb der Bewegungsbahnen der rotierenden Werkzeuge (27) erstrecken und zu den Lockerungsscharen (2a, 2b) der ersten Reihe (28) auf Lücke angeordnet sind, wobei die Lockerungsscharen (2a, 2b) der ersten Reihe (28) einzelne Feldstreifen (14) bearbeiten, zwischen denen andere Feldstreifen (15) zunächst unbearbeitet bleiben, und diese anderen Feldstreifen (15) erst durch die Lockerungsscharen (2a, 2b) der zweiten Reihe (29) bearbeitet werden, wenn die von den Lockerungsscharen (2a, 2b) der ersten Reihe (28) bearbeitete Erde der daneben liegenden einzelnen Feldstreifen (14) bereits wieder abgelegt ist.

2. Gerätekombination nach Anspruch 1, dadurch gekennzeichnet, daß die Lockerungsscharen (2a, 2b) an an der Rückseite des Rahmens (8, 30, 47) anbringbaren, nach vorne abgebogenen Haltestielen (3b) angebracht sind, die sich unter dem Werkzeugträger (6) nach vorne erstrecken.

3. Gerätekombination nach Anspruch 1, dadurch gekennzeichnet, daß die Lockerungsscharen (2a, 2b) an an der Vorderseite der Rahmenrohre (8, 30, 47) angeordneten Haltestielen (3) angebracht sind, die sich zwischen den Bewegungsbahnen der Werkzeuge (27) erstrecken.

4. Gerätekombination nach mindestens einem der Ansprüche 1 bis 3, dadurch gekennzeichnet, daß wenigstens zwei Lockerungsscharen (2a, 2b) am zweiten Arbeitsgerät (7) in einem der Spurweite des Schleppers entsprechenden, großen seitlichen Abstand angeordnet sind.

5. Gerätekombination nach mindestens einem der Ansprüche 1 bis 4, dadurch gekennzeichnet, daß die Haltestiele (3, 3b) der Lockerungsscharen (2a, 2b) in an sich bekannter Weise höhenverstellbar und leicht abnehmbar in an dem Rahmen (4;, 8, 30, 47) angeordneten Stielhaltern (25) angebracht sind.

6. Gerätekombination nach Anspruch 5, dadurch gekennzeichnet, daß die Stielhalter (25) als am Rahmen (4; 8, 30, 47) anklemmbare, ggf. seitlich verstellbare, nach vorne oder hinten ausragende Stecktaschen für höhenverstellbare Haltestiele (3, 3b) ausgebildet sind.

7. Gerätekombination nach mindestens einem der Ansprüche 1 bis 6, dadurch gekennzeichnet, daß an das Arbeitsgerät (7) zur Krümelung der obersten Bodenschicht (5) eine Walze (10, 56, 89) ankuppelbar ist.

8. Gerätekombination nach mindestens einem der Ansprüche 1 bis 7, dadurch gekennzeichnet, daß an das Arbeitsgerät (7) zur Krümelung der obersten Bodenschicht (5) eine Sämaschine (13, 77, 93) ankuppelbar ist.

9. Gerätekombination nach den Ansprüchen 7 oder 8, dadurch gekennzeichnet, daß die Sämaschine (77, 93) auf dem Rahmen (8, 30, 47) des Arbeitsgerätes (7) zur Krümelung der obersten Bodenschicht (5) oder auf die Walze (89) aufsetzbar ist.

## Claims

1. An implement combination with a working implement (1), whose frame (4) extends transversely to the direction of advance and supports, by means of arms (3), loosening shares (2a, 2b) formed by wing shares (2a) or flat shares (2b), which cut, hold up and loosen the soil without substantially turning over or mixing the natural layers of the soil and which are arranged in a certain distance from one another in a row (28), and with a further working implement (7), whose frame (8, 30, 47) extends transversely to the direction of advance and supports at least one transmission (19) and at least one motorized tool holder (6) with rotary tools (27) for crumbling the upper layer of the soil (5), characterized in that the frame (8, 30, 47) of the second working implement (7) supports, by means of arms (3), loosening shares (2a, 2b) also formed by wing shares (2a) or flat shares (2b) and arranged in a certain distance from one another in a second row (29), which cut, hold up and loosen the soil without substantially turning over or mixing the natural layers of the soil and which are mounted on the frame (8, 30, 47) in such a manner that they extend in front of and under the trajectories described by the rotary tools (27) and in a staggered manner with the loosening shares (2a, 2b) of the first row (28), whereby the loosening shares (2a, 2b) of the first row (28) work individual strips (14) of the field while leaving unworked strips (15) there between, which will be worked by the loosening shares (2a, 2b) of the second row (29) only when the adjacent individual strips (14) worked by the loosening shares (2a, 2b) of the first row (28) are laid down again.

2. An implement combination according to claim 1, characterized in that the loosening shares (2a, 2b) are arranged on forwardly bent arms (3) which can be fastened to the rear of the frame (8, 30, 47) and extend forwardly under the tool holder (6).

3. An implement combination according to claim 1, characterized in that the loosening shares (2a, 2b) are arranged on arms (3) fastened to the front of the frame (8, 30, 47) and which extend between the trajectories described by the tools (27).

4. An implement combination according to at least one of claims 1 to 3, characterized in that the second working implement (7) comprises at least two loosening shares (2a, 2b) arranged in an important lateral distance from one another, equivalent to the gauge of the tractor.

5. An implement combination according to at least one of claims 1 to 4, characterized in that the arms (3, 3b) supporting the loosening shares (2a, 2b) are arranged in a well known manner on arm holders (25) fastened to the frame (4; 8, 30, 47), so that they are adjustable in height and easily dismountable.

6. An implement combination according to claim 5, characterized in that the arm holders (25) are formed by sleeves for the arms (3, 3b) which are adjustable in height, said sleeves which extend forwardly or backwardly being clampable to the frame (4; 8, 30, 47) and if necessary laterally adjustable.

7. An implement combination according to at least one of claims 1 to 6, characterized in that a roller (10, 56, 89) can be coupled to the working implement (7) for crumbling the upper layer of the soil (5).

8. An implement combination according to at least one of claims 1 to 7, characterized in that a seeder (13, 77, 93) can be coupled to the working implement (7) for crumbling the upper layer of the soil (5).

9. An implement combination according to claim 7 or 8, characterized in that the seeder (77, 93) can be fastened to the frame (8, 30, 47) of the working implement (7) for crumbling the upper layer of the soil (5) or to the roller (89).

## Revendications

1. Combinaison d'outils avec un outil de travail (1), dont le châssis (4) qui s'étend transversalement à la direction d'avance, supporte, au moyen de bras supports (3), des socs d'ameublissement (2a, 2b) réalisés sous forme de socs à ailerons (2a) ou de socs plats (2b), qui coupent le sol, le soulèvent et l'ameublissent sensiblement sans retourner ou mélanger entre elles les couches naturelles du sol et qui sont implantés à une certaine distance les uns à côté des autres sur une rangée (28), et avec un autre outil de travail (7), dont le châssis (8, 30, 47) qui s'étend transversalement à la direction d'avance, supporte au moins une transmission (19) et au moins un support d'outil (6) motorisé, muni d'outils rotatifs (27) pour l'émottage de la couche supérieure (5), caractérisée par le fait que le châssis (8, 30, 47) du deuxième outil de travail (7) supporte, au moyen de bras supports (3), des socs d'ameublissement (2a, 2b) également réalisés sous forme de socs à ailerons (2a) ou de socs plats (2b) et implantés à une certaine distance les uns des autres sur une deuxième rangée (29), qui coupent le sol, le soulèvent et l'ameublissenet sensiblement sans retouner ou mélanger entre elles les couches naturelles du sol et qui sont montés sur le châssis (8,30, 47), de manière à s'étendre devant et en-dessous de la trajectoire des outils rotatifs (27) et à se trouver en quinconce par rapport aux socs d'ameublissement (2a, 2b) de la première rangée (28), les socs d'ameublissement (2a, 2b) de la première rangée (28) travaillant des bandes de terre (14) individuelles, entre lesquelles d'autres bandes de terre (15) ne sont, dans un premier temps, pas travaillées et ne le seront, à l'aide des socs d'ameublissement (2a, 2b) de la deuxième rangée (29), que lorsque les bandes de terre (14) adjacentes travaillées par les socs d'ameublissement (2a, 2b) de la première rangée (28) seront à nouveau redéposées.

2. Combinaison d'outils selon la revendication 1, caractérisée par le fait que les socs d'ameublissement (2a, 2b) sont montés sur des bras supports (3b) coudés vers l'avant, qui peuvent être fixés à l'arrière du châssis (8, 30, 47) et qui s'étendent vers l'avant sous le support d'outil (6).

3. Combinaison d'outils selon la revendication 1, caractérisée par le fait que les socs d'ameublissement (2a, 2b) sont montés sur des bras supports (3) fixés à l'avant du châssis (8, 30, 47), qui s'étendent entre les trajectoires décrites par les outils (27).

4. Combinaison d'outils selon l'une au moins des revendications 1 à 3, caractérisée par le fait que le deuxième outil de travail (7) comporte au moins deux socs d'ameublissement (2a, 2b) implantés l'un par rapport à l'autre à une distance latérale importante, équivalente à la voie du tracteur.

5. Combinaison d'outils selon l'une au moins des revendications 1 à 4, caractérisée par le fait que les bras supports (3, 3b) des socs d'ameublissement (2a, 2b) sont, d'une manière connue en soi, montés de façon à être réglables en hauteur et facilement démontables sur des supports de bras (25) fixés au châssis (4; 8, 30, 47).

6. Combinaison d'outils selon la revendication 5, caractérisée par le fait que les supports de bras (25) sont constitués de fourreaux pour des bras (3, 3b) réglables en hauteur, lesdits fourreaux qui s'étendent vers l'avant ou vers l'arrière, pouvant être fixés au châssis (4; 8, 30, 47) par pincement et, le cas échéant, être réglés latéralement.

7. Combinaison d'outils selon l'une au moins des revendications 1 à 6, caractérisée par le fait qu'à l'outil (7) destiné à l'émottage de la couche supérieure du sol (5), peut être accouplé un rouleau (10, 56, 89).

8. Combinaison d'outils selon l'une au moins des revendications 1 à 7, caractérisée par le fait qu'à l'outil (7) destiné à l'émottage de la couche supérieure du sol (5) peut être accouplé un semoir (13, 77, 93).

9. Combinaison d'outils selon la revendication 7 ou 8, caractérisée par le fait que le semoir (77, 93) peut être monté sur le châssis (8, 30, 47) de l'outil de travail (7) pour l'émottage de la couche supérieure du sol (5) ou sur le rouleau (89).
